# EUROPÄISCHE PATENTANMELDUNG

(11) **EP 0 689 015 A1**
(43) Veröffentlichungstag der Anmeldung: **27.12.1995**
(21) Anmeldenummer: 95106904.6
(22) Anmeldetag: 08.05.1995
(51) Int. Cl.: F25B 41/06, F16K 39/02

(54) **Regelventil mit Stellantrieb**

(30) Priorität: 21.06.1994 CH 1961/94
(71) Anmelder: STAEFA CONTROL SYSTEM SCS AG, CH-8712 Stäfa (CH)
(72) Erfinder: Hegglin, Andreas, CH-8404 Reutlingen (CH); Pulli, Guiseppe, CH-8712 Stäfa (CH); Brühlmann, Manuel, CH-8006 Zürich (CH)
(74) Vertreter: Patentanwälte Schaad, Balass & Partner AG

(57) **Zusammenfassung**

Die den Durchlass (22) im Ventilgehäuse (10) beherrschende, mit einem Ventilsitz (24) zusammenwirkende Drosselkante (44) ist an einem Absperrkolben (40) vorgesehen, der in einem Kolbenraum (36) im Ventilgehäuse verschiebbar ist und ein koaxial angeordnetes Vorsteuerventil (50) enthält. Dessen Durchlassöffnung (52), die mit der Auslassbohrung des Ventilgehäuses in Verbindung steht, ist in der geschlossenen Stellung seines Absperrgliedes (56) gegenüber dem Kolbenraum abgesperrt. Der Kolbenraum steht über eine Drosselbohrung (38) in ständiger Verbindung mit der Einlassbohrung (14) des Ventilgehäuses. Der an dieser Einlassbohrung herrschende Druck beaufschlagt den Absperrkolben und hält diesen in der geschlossenen Stellung. Ein Stössel (82) eines Magnetankers, der koaxial zum Absperrkolben angeordnet ist, wirkt auf einer ersten Wegstrecke einer Hubbewegung gegen das Absperrglied und öffnet dieses entgegen der Wirkung von einer Schliessfeder (64). Damit wird der Druck im Kolbenraum abgebaut und jenem an der Auslassbohrung angeglichen. Auf der anschliessenden zweiten Wegstrecke der Hubbewegung wirkt der Stössel unmittelbar gegen den Absperrkolben und hat bei dessen Verschiebung in Öffnungsrichtung lediglich die Vorspannung der Druckfeder (48) zu überwinden, die den Absperrkolben in die geschlossene Stellung zurückführen kann. Mit dem Stössel ist ein Glied eines Wegaufnehmers starr verbunden, der unmittelbar ein Istwertsignal sowohl insbesondere für die Stellung des Absperrkolbens bzw. der Schliesskante liefert.

## Beschreibung

Die Erfindung betrifft ein Regelventil nach dem Oberbegriff von Anspruch 1.

Ein Regelventil der obigen Bauart ist bekannt. Beim bekannten Ventil ist das als Ventilkegel ausgebildete Absperrglied des Vorsteuerventiles unmittelbar an einem Stössel angebracht, der mit dem als Antriebsglied wirkenden Magnetanker des elektomagnetischen Stellantriebes starr verbunden ist. Die vom Absperrglied des Vorsteuerventiles eingenommene Stellung bestimmt den Druck im Kolbenraum und damit die Stellung des Absperrorganes. Soll der Durchfluss des zu regelnden Mediums durch das Ventil reduziert werden, wird durch Verschiebung des Magnetankers das Absperrglied in Richtung des Durchlassgliedes verschoben, um den Abfluss von Hochdruckmedium zu drosseln. Am Kolben des Absperrorganes baut sich damit ein gegen die Kraft einer Öffnungsfeder wirkender Druck auf und verschiebt den Kolben und damit das Absperrorgan in Schliessrichtung.

Wird ein solches Regelventil in einem Kreislauf eines zu regelnden Mediums - zum Beispiel dem Kältemittel im Kältekreis einer Kältemaschine - eingebaut, so lässt sich das Ausmass der regelnden Einwirkung erst an dem im Kältekreis eintretenden, den herrschenden Druckverhältnissen unterliegenden Ergebnis feststellen.

Aufgabe der Erfindung ist die Schaffung eines Regelventiles, das beim Regelbetrieb in direkter Weise auf die Einwirkung des Antriebsgliedes reagiert und das selbst fähig ist, zwischen Hoch- und Niederdruck abzusperren bzw. abzudichten und mithin die üblicherweise von zwei getrennten Ventilen zu erbringenden Funktionen erfüllt.

Die Lösung der erfindungsgemässen Aufgabe gelingt mit den Merkmalen von Anspruch 1.

Da das Antriebsglied nicht nur am Vorsteuerventil sondern beim Regelbetrieb auch am Absperrorgan direkt und ohne Zwischenschaltung eines Betätigungsmediums wirksam ist, entspricht die Regeleinwirkung unmittelbar dem jeweiligen Hubweg des Antriebsgliedes. Andererseits kann die für das sichere Absperren benötigte Schliesskraft aus dem Druck des zu regelnden Mediums gewonnen werden, ohne jedoch diese Schliesskraft beim Öffnen durch das Antriebsglied überwinden zu müssen. Hierfür ist der mittels des Vorsteuerventiles herstellbare Druckausgleich am Absperrkolben verantwortlich. Dies erlaubt eine leistungsmässig bescheidene Dimensionierung des Stellantriebes. Für die Betätigung des Vorsteuerventiles wie auch die Betätigung des Absperrorganes kann mit der gleichen Energieform gearbeitet werden.

In Richtung der Bewegung des Antriebsgliedes betrachtet, ist das Absperrglied des Vorsteuerventiles dem Absperrorgan so vorgeschaltet, dass - von der vollständig geschlossenen Stellung des Regelventiles ausgehend - auf einer ersten Wegstrecke das Vorsteuerventil und auf einer zweiten, in gleicher Bewegungsrichtung anschliessenden Wegstrecke, das Absperrorgan geöffnet wird.

Da durch das Öffnen des Vorsteuerventiles an beiden Seiten des Absperroganes ein Druckausgleich stattgefunden hat, ist für die Bewegung dieses Absperrorganes aus seiner Schliesslage nur eine Kraft notwendig, die in der Grössenordnung der Vorspannung der zugeordneten Druckfeder liegt. Mithin wird der gesamte Betrieb des Regelventiles mit relativ kleiner Antriebskraft ermöglicht.

Damit kann der Antrieb selbst relativ klein dimenisoniert werden, was sich sowohl auf der Kostenseite wie auch bezüglich Platzbedarf günstig auswirkt.

In der geschlossen Stellung des Vorsteuerventiles befindet sich zwangsweise auch das Absperrorgan in der vollständig geschlossenen Stellung. Der Druck des Mediums baut sich auf der Rückseite des Absperrorganes auf und überlagert damit die Wirkung der Schliessfeder in Abhängigkeit des Systemdruckes.

Gemäss einer bevorzugten und besonders vorteilhaften Ausführungsform des erfindungsgemässen Regelventiles ist das Absperrorgan als Schieber ausgebildet, welcher das Vorsteuerventil enthält und mit welchem dessen Durchlassglied starr verbunden ist, während das Absperrglied des Vorsteuerventiles zum Schieber relativ beweglich ist.

Nachfolgend ist die Erfindung anhand einer beispielsweisen Ausführungsform und unter Bezugnahme auf die Zeichnung näher erläutert. Es zeigen:
- Fig. 1: einen Axialschnitt durch das Regelventil nach der ersten Ausführungsform;
- Fig. 2: in vergrössertem Massstab eine Schnittdarstellung des Ventilteiles nach Fig. 1 in der vollständig geschlossenen Stellung;
- Fig. 3: eine Fig. 2 entsprechende Darstellung mit göffnetem Vorsteuerventil; und
- Fig. 4: den Ventilteil nach Fig. 2 mit geöffnetem Absperrorgan.

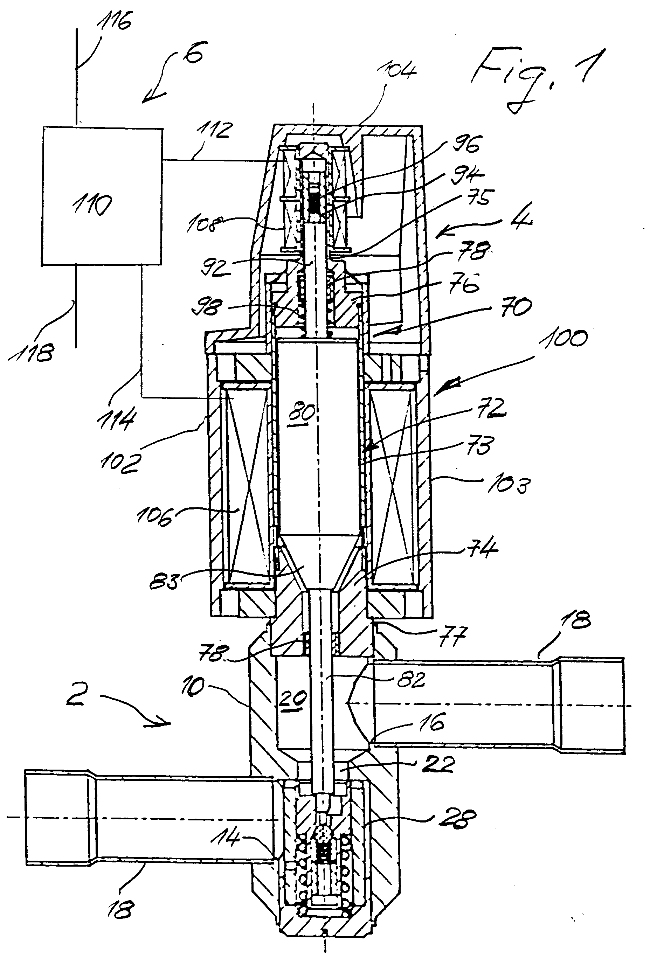

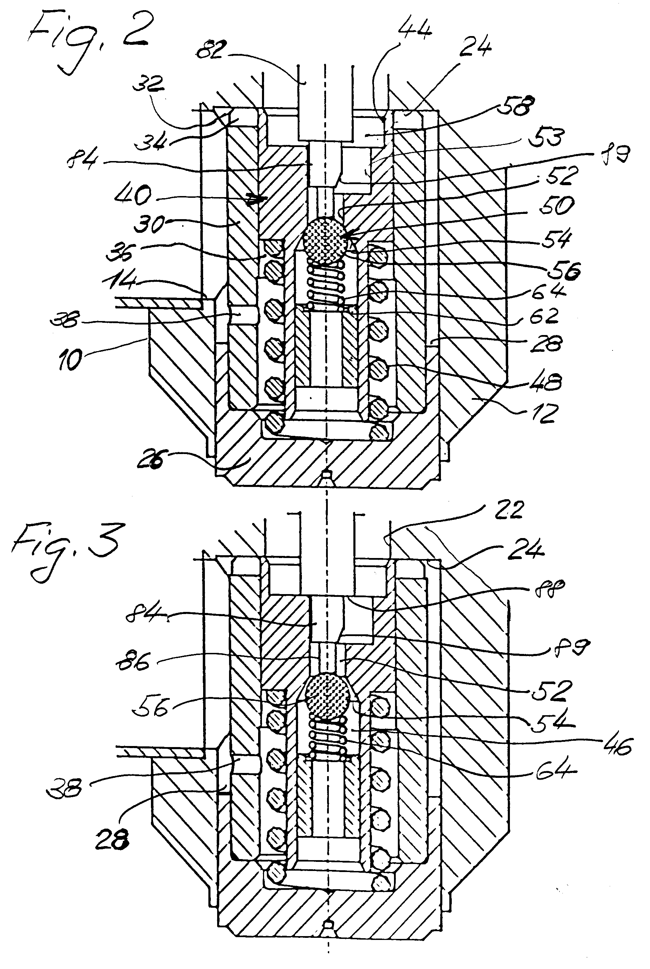

In Fig. 1 ist allgemein mit 2 ein Ventilteil, mit 4 ein in dessen axialer Verlängerung angeordneter Antriebsteil und mit 6 ein Reglerteil bezeichnet. Der Ventilteil 2 umfasst ein etwa zylindrisches Ventilgehäuse 10, einen durch eine Bohrung gebildeten radialen Einlass 14 sowie einen bezüglich desselben in Achsrichtung versetzten radialen Auslass 16, der ebenfalls durch eine Bohrung gebildet ist. Die Einlassbohrung 14 mündet in einen zylindrischen Ringraum 28 (Fig. 2) ein, der zwischen der Gehäusewand 12 und einer ebenfalls Teil des Ventilgehäuses darstellenden Büchse 30 gebildet ist. Mit dem Ringraum 28 steht die Auslassbohrung 16 über einen zylindrischen Innenraum 20 und einen an diesen anschliessenden, im Querschnitt reduzierten Durchlass 22 in Verbindung. Der Durchlass 22 ist gegenüber dem Ringraum 28 im Durchmesser durch eine Gehäuseschulter 24 abgesetzt. In die Einlassbohrung 14 und die Auslassbohrung 16 ist je ein aus einer Kupferlegierung bestehendes Anschlussrohr 18 eingesetzt und durch Verlötung an dem aus rostfreiem Stahl gebildeten Ventilgehäuse 10 befestigt.

Die zylindrisch ausgebildete Büchse 30 ist in einer dem Ventilgehäuse 10 angehörenden und mit diesem verschweissten Endkappe 26 zentriert und mit der entgegengesetzten Stirnseite 32 an der Gehäuseschulter 24 angepresst gehalten. Von der Stinseite 32 gehen Durchbrechungen in Form von mehreren über den Umfang verteilten, radialen Nuten 34 aus. Anzahl und Querschnitt dieser Nuten 34 bestimmen die DurchlassNenngrösse des Regelventiles.

In deren Innern bildet die Büchse 30 einen Kolbenraum 36, in welchem ein allgemein mit 40 bezeichneter Absperrkolben vorgesehen ist. Der Absperrkolben umfasst ein Absperrorgan in der Form eines im Kolbenraum beweglichen, hülsenförmig ausgebildeten Schiebers 42. Eine vorgespannte Druckfeder 48, die sich an der Endkappe 26 abstützt, presst den Schieber 42 mit einer Drosselkante 44 an die einen Ventilsitz bildende Gehäuseschulter 24. Dem Absperrkolben 40 gehört weiter ein allgemein mit 50 bezeichntes Vorsteuerventil an, das vollständig im Innern des Schiebers 42 angeordnet ist. Das Vorsteuerventil 50 umfasst eine von einem konischen Sitz 54 umgebene Durchlassöffnung 52 am Schieber selbst, sowie ein kugelförmiges, z.B. aus einem harten Kunststoff gebildetes Absperrglied 56. Das Letztere ist in einem Innenraum 46 des Schiebers 42 beweglich angeordnet. Der Innenraum 46 ist über die Durchlassöffnung 52 mit einem Innenraum 58 verbunden, der auf der Seite der Drosselkante 44 über den Durchlass 22 mit dem Auslass 16 in ständiger Verbindung steht. An einem ringförmigen Einsatz 62 stützt sich eine im Innenraum 46 angeordnete Schliessfeder 64 ab, die das Absperrglied 56 gegen den Sitz 54 presst. Die zylindrische Durchlassöffnung 52 besitzt eine dem Innenraum 58 zugekehrte, exzentrische Ausbuchtung 53, auf welche noch einzugehen sein wird.

Der Kolbenraum 36 und damit auch der Innenraum 54 kommuniziert mit dem Ringraum 28 über eine Drosselverbindung in der Form einer Drosselbohrung 38. Bei der nachfolgenden Erläuterung der Wirkungsweise wird hierauf ebenfalls noch weiter eingegangen.

Nachfolgend wird der elektromagnetische Antriebsteil 4 erläutert, der eine Spuleneinheit 100 und eine in dieser angeordnete, als selbständige Baugruppe ausgebildete Ankereinheit 70 umfasst. Die Ankereinheit 70 ist gehäuseartig durch eine Ankerkapsel 72 begrenzt, die zusammen mit dem Ventilgehäuse 10 hermetisch abgeschlossen ist. Die Ankerkapsel 72 ist aus zwei durch eine Verbindungshülse 73 vereinigte Führungskörper 74 und 76 aufgebaut. Die beiden aus Werkzeugstahl bestehenden Führungskörper sind mit der aus gleichem Material gebildeten Verbindungshülse 73 durch Schweissnähte 75 starr verbunden. Der Führungskörper 74 ist auf der dem Antriebsteil 4 zugekehrten Seite in das Ventilgehäuse 10 eingesetzt und bei 77 mit diesem durch eine sog. Schwarz-Weiss-Schweissung starr verbunden. Die Ankerkapsel 72 nimmt bezüglich des Ventilgehäuses 10 eine koaxiale Lage ein.

Innnerhalb der Ankerkapsel 72 ist ein zylindrischer Magnetanker 80 koaxial angeordnet, der einstückig mit einem zu diesem koaxialen Stössel 82 bzw. einer koaxialen Ankerverlängerung 92 ausgebildet ist. Dabei ist der Magnetanker 80 am Stössel bzw. an der Ankerverlängerung vermittels je eines in die Führungskörper 74 und 76 eingesetzten Gleitlagers 78 in der Ankerkapsel 72 in reibungsarmer Weise verschiebbar geführt. In den als Kern wirkenden Führungskörper 74, der als Hohlkonus ausgebildet ist, dringt der Magnetanker 80 mit einem konischen Ansatz 83 ein. Der Stössel 82 erstreckt sich durch das Ventilgehäuse 10 und endet in einem Stift 86 (Fig. 2). Der Innendurchmesser des Durchlasses 52 ist kleiner als der Durchmesser des Stössels 82. Ein durch eine radiale Schulter 88 im Durchmesser verjüngter Teil 84 des Stössels erstreckt sich durch den die Ausbuchtung 53 aufweisenden Abschnitt des Durchlasses 52 und besitzt am Übergang zum Stift 86 eine Abflachung 89.

An der dem Ventilteil 2 abgekehrten Seite weist der Führungskörper 74 einen im Durchmesser verjüngten Halsteil 75 auf, in welcher sich die Ankerverlängerung 92 mit einem freien, hülsenförmigen Endteil 94 erstreckt. Der Endteil 94 enthält einen z.B. aus Weicheisen gebildeten Ankereinsatz 96, der in noch zu beschreibender Weise als Signalgeber wirkt. Schliesslich enthält die Ankerkapsel 72 eine die Ankerverlängerung 92 umgebende Druckfeder 98, die sich zwischen der Führungshülse 74 und dem Magnetanker 80 unter geringer Vorspannung erstreckt. Die Druckfeder 98 hält den Stössel 82 ständig in einer Lage, in welcher der Stift 86 am Absperrglied 56 anliegt.

Aus dem Vorstehenden ergibt sich, dass Ankerkapsel 72 und Ventilgehäuse 10 gemeinsam alle beweglichen Teile des Regelventiles, einschliesslich jener für eine vorgesehene Wegerfassung enthalten und damit eine Abdichtung für in dieser Einheit geführtes Medium auf konstruktiv einfache und zuverlässige Weise ermöglichen.

Die Spuleneinheit 100, welche die Ankereinheit 70 umgibt, besitzt ein zweiteiliges Gehäuse 102, bestehend aus einem Unterteil 103 und einem Oberteil 104. Der Unterteil 103 enthält eine ringförmige Magnetspule 106, während im lösbar mit dem Unterteil 103 verbundenen Oberteil 104 eine bezüglich der Magnetspule 106 koaxiale, jedoch in Achsrichtung versetzte Wegaufnehmerspule 108 angeordnet ist. Die Magnetspule 106 erstreckt sich etwa im Axialbereich des Magnetankers 80, während die Wegaufnehmerspule 108 den Ankereinsatz 94 ungibt, mit welchem diese einen Wegaufnehmer bildet. Die Lage der Teile wird durch eine nicht dargestellte Befestigung der Ankerkapsel 72 im Gehäuse 102 gewährleistet.

Der Reglerteil 6 umfasst eine schematisch dargestellte elektronische Regeleinrichtung 110, die - in üblicher Weise aufgebaut und geschaltet - einen Komparator, einen Regler, sowie einen Verstärker (alle nicht dargestellt) aufweist. Ein Istwerteingang 112 ist mit der Wegaufnehmerspule 108 verbunden, während ein Ausgang 114 an die Magnetspule 106 angeschlossen ist. Daneben weist die Regeleinrichtung 110 einen Sollwerteingang 116 sowie einen Speisespannung-Anschluss 118 auf.

Nunmehr soll die Wirkungsweise im Betrieb des Regelventiles erläutert werden, wobei angenommen wird, dass dieses im Kältekreis einer Kaltdampf-Kompressions-Kältemaschine eingebaut ist. Dabei sei angenommen, dass im geschlossenen Zustand des Regelventiles in der Einlassbohrung 14 bzw. im Ringraum 28 das Kältemedium unter dem Verflüssigungsdruck (z.B. 20 bar) steht, während demgegenüber in der Auslassbohrung 16 bzw. im Innenraum 20 ein z.B. um 15 bar niedrigerer Druck herrscht. Infolge der dauernden Verbindung des Kolbenraumes 36 sowie des Innenraumes 46 mit dem Ringraum 28 herrscht im geschlossenen Zustand des Regelventiles in diesen Räumen praktisch der gleiche Druck wie an der Einlassbohrung 14. Dieser Druck wirkt am Absperrkolben 40 in gleicher Richtung wie die Druckfeder 46, wobei die Schliesskraft der vollen Querschnittsfläche des Kolbenraumes 36 entspricht. Konkret wirkt der Druck am Schieber 42, der mit seiner Drosselkante 44 gegen die Gehäuseschulter 24 gepresst wird, sowie in gleicher Richtung wie die Schliessfeder 64 am Absperrglied 56, das gegen den Sitz 54 gedrückt wird. Infolge dieser in Schliessrichtung zusätzlich wirkenden, unterstützenden Kräfte ist das Regelventil demnach grundsätzlich in der Lage, im Rahmen seiner Auslegung jeden Differenzdruck zu beherrschen, d.h. bei jeder Druckdifferenz zwischen Einlass 14 und Auslass 16 abzudichten.

Es wird weiter unterstellt, dass das System der Kältemaschine in bekannter Art und Weise mit einem Regler ausgestattet ist. Unter anderem veranlasst dieser Systemregler den Öffnungsvorgang des geschlossenen Regelventiles nach einem vorbestimmten Verlauf.

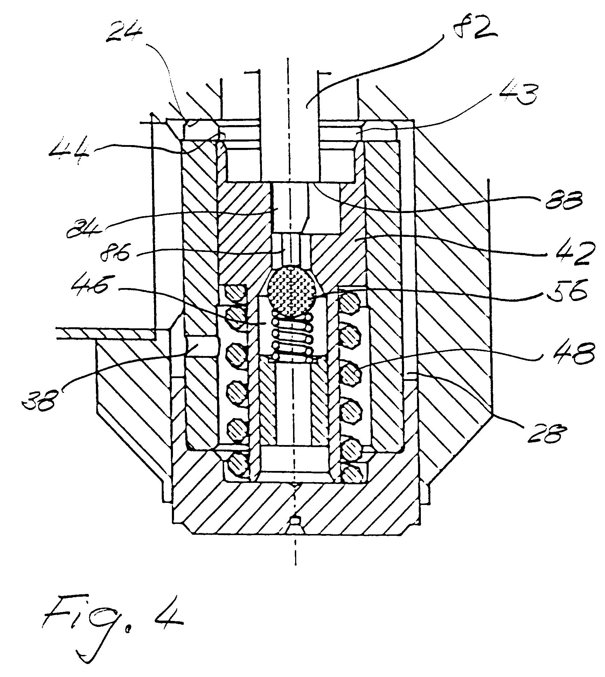

Wenn dementsprechend am Sollwerteingang 116 ein Oeffnungssignal erscheint, wird am Magnetanker 80, eingeleitet durch die Regeleinrichtung 110, eine Kraft erzeugt. Diese Kraft, die in Öffnungsrichtung des Regelventiles, d.h. in Richtung des Pfeiles 120 weist, erzeugt am Stössel 82 einen Hub. Dieser Hub wirkt den Kräften entgegen, die - wie vorstehend erwähnt - im geschlossenen Zustand am Absperrglied 56 herrschen. Bei diesem Hub wird das Absperrglied 56 über den Stift 86 vom Sitz 54 abgehoben und der Durchlass 52 des Vorsteuerventiles 50 geöffnet. Aus der Lage der Teile entsprechend der Darstellung in Fig. 3 ist ersichtlich, dass auf der mit diesem Hub zurückgelegten ersten Wegstrecke des Stössels 82 der Schieber 42 des Absperrkolbens 40 geschlossen bleibt, da es sich um eine Relativbewegung zu diesem Schieber handelt. Jedoch baut sich der an diesem Schieber 42 herrschende Schliessdruck, d.h. Differenzdruck, rasch und weitgehend ab und es stellt sich der im Innenraum 20 herrschende Druck ein. Medium aus dem Kolbenraum 36 kann über Durchlass 52 und Innenraum 58 des Schiebers 42 in den Innenraum 20 des Ventilgehäuses 10 abströmen, wobei die Abflachung 89 am Stössel den ungehinderten Durchtritt des Mediums vom Durchlass 52 über die Ausbuchtung 53 ermöglicht. Andererseits lässt die Drosselbohrung 38 neues Druckmedium vom Einlass 14 bzw. Ringraum 18 nur unter starkem Druckabfall nachströmen. Die Drosselbohrung könnte selbstverständlich durch eine andere Art der gedrosselten Verbindung zwischen den betreffenden Räumen, z.B. durch Spiel des Schiebers 42 in der Büchse 30, ersetzt sein.

Die Fortsetzung der Hubbewegung in der gleichen Bewegungsrichtung des Stössels 82 über eine zweite Wegstrecke bringt dessen Schulter 88 am Schieber 42 selbst - und zwar ebenfalls in Öffnungsrichtung - zur Einwirkung. Inzwischen hat am Absperrkolben 40 ein Druckausgleich stattgefunden. Der Öffnungsbewegung des Schiebers 42 wirkt dementsprechend lediglich die Vorspannung der Druckfeder 46 als Kraft entgegen. Diese Kraft kann durch den Magnetantrieb auch bei bescheidener Dimensionierung überwunden und damit der Schieber 42 in eine geöffnete Stellung verbracht werden. Der sich zwischen Ventilsitz 24 und Drosselkante 44 bildende Ringspalt 43 (Fig. 4) lässt vorerst nach Massgabe seiner Breite, d.h. axialen Erstreckung, Medium aus der Einlassbohrung 14 über den Ringraum 28 und die Radialnuten 34 zum Durchlass 22 und damit zum Innenraum 20 sowie schliesslich zur Auslassbohrung 16 abströmen. Der maximale Öffnungsquerschnitt ist, wie erwähnt, durch den Totalquerschnitt der Radialnuten gegeben.

Jeder geöffneten Stellung des Schiebers 42 bzw. Breite des Ringspaltes 43 entspricht infolge der von der Druckfeder 46 erzwungenen dauernden Anlage desselben am Stössel 82 bzw. dessen Schulter 88 eine bestimmte Stellung des Magnetankers 80. Der effektive Hubweg des Magnetankers bzw. dessen Verschiebebewegungen wird vom Wegaufnehmer 108, 94 erfasst und der Regeleinrichtung 110 über den Istwerteingang 112 als entsprechendes Signal geliefert. Der Vergleich mit dem Sollwertsignal veranlasst die Regeleinrichtung 110 im Fall von Abweichungen zur Erzeugung eines elektrisch verstärkten Korrektursignales und bewirkt damit einen entsprechenden Korrekturhub am Magnetanker 80 über den Ausgang 114 und die Magnetspule 106.

Mit der Ausgestaltung des Führungskörpers 72 als Hohlkonus sowie dem konischen Ansatz 82 des Magnetankers 80 wird in an sich generell bekannter Weise die Feldstärkenverteilung über den Weg des letzteren beeinflusst.

Die Ausgestaltung des Ventilgehäuses 10 mit einer Büchse 30 zur Begrenzung des Kolbenraumes 36 gestattet, durch Auswahl einer solchen mit einem bestimmenten Totalquerschnitt der Radialnuten 34, bei sonst gleichbleibendem Regelventil dessen Durchlass-Nenngrösse zu dimensionieren. Die Herstellung und Lagerhaltung der Teile des Regelventiles für unterschiedliche Nenngrössen ist dementsprechend einfach möglich.

Der Wegaufnehmer 108, 94 liefert ein Signal sowohl für die Stellung des Vorsteuergliedes wie auch für jene des Absperrorganes, da der Stössel mit beiden zusammenwirkt. Das direkte Zusammenwirken der Einheit aus Ankerverlängerung 94, Magnetanker 80 und Stössel 82 erlaubt die Erzeugung eines für die Regelung geeigneten bzw. genauen Istwertsignales.

Es sei nachgetragen, dass anstelle eines Magnetantriebes für das Regelventil erfindungsgemäss grundsätzlich auch ein anderer elektrischer Antrieb mit einem linear beweglichen Antriebsglied in Betracht kommt. Jedoch eignet sich ein Magnetantrieb nicht nur deshalb gut, weil dieser für die Regelfunktion genügend rasch reagierend ist, sondern infolge des geringen Kraftbedarfes auch für die Erfüllung der Absperr- bzw. Abdichtfunktion. Überdies sind bei einem Magnetantrieb die mit dem Antriebsglied zusammmenhängenden Dicht- bzw. Durchführungsprobleme durch die Kapselung in eindeutiger Weise vermeidbar.

## Patentansprüche

1. Regelventil mit Stellantrieb, mit einem in einem Ventilgehäuse (10) zwischen einem Einlass (14) und einem Auslass (16) vorgesehenen Durchlass (22), sowie einem diesen Durchlass beherrschenden Absperrorgan (44), das an Absperrkolben (40) vorgesehen ist, welcher in einem von Druckmedium beaufschlagbaren Kolbenraum (36) verschiebbar geführt ist, einem Vorsteuerventil (50), das einen an den Kolbenraum angeschlossenen Vorsteuerdurchlass (52) aufweist, sowie einem linear beweglichen Antriebsglied (80), das mit dem diesen beherrschenden Absperrglied (56) in Wirkverbindung steht, in dessen geöffneter Stellung der Kolbenraum mit dem Auslass verbunden ist, dadurch gekennzeichnet, dass das Absperrorgan mit dem Absperrglied des Vorsteuerventiles in der Weise in Reihe angeordnet ist, dass das sich durch den Durchlass erstreckende Antriebsglied auf einer zweiten Wegstrecke, die an eine erste Wegstrecke in Öffnungsrichtung des Absperrgliedes in gleicher Bewegungsrichtung anschliesst, am Absperrorgan angreift und dass der Kolbenraum mit dem Einlass (14) über eine Drosselverbindung (38) kommuniziert.

2. Regelventil nach Anspruch 1, dadurch gekennzeichnet, dass das Vorsteuerventil (50) im Absperrkolben (40) angeordnet ist und das Absperrglied (56) zu diesem letzteren relativ beweglich ist.

3. Regelventil nach Anspruch 1 oder 2, dadurch gekennzeichnet, dass mit dem Antriebsglied (80) ein Geberelement (96) mitbeweglich ist, das mit einem stationären Wegaufnehmerelement (108) zusammenwirkt.

4. Regelventil nach Anspruch 1, dadurch gekennzeichnet, dass am Absperrorgan (44) und am Absperrglied (56) je eine Druckfeder (46, 64) der Öffnungsrichtung entgegengesetzt angreift.

5. Regelventil mit Magnetantrieb, mit einem in einem Ventilgehäuse (10) zwischen einem Einlass (14) und einem Auslass (16) vorgesehenen Durchlass (22), sowie einem diesen Durchlass beherrschenden, in einem Kolbenraum (36) des Ventilgehäuses verschiebbar geführten, ein Absperrorgan (42) aufweisenden Absperrkolben (40), wobei der Kolbenraum von Druckmedium beaufschlagbar ist, einem zum Absperrkolben koaxialen Vorsteuerventil (50), das einen Vorsteuerdurchlass (52) und ein diesen beherrschendes Absperrglied (56) aufweist und einem Magnetanker (80), der über einen mit diesem starr verbundenen Stössel (82) mit dem Absperrglied in Wirkungsverbindung steht, wobei Absperrkolben und Absperrglied je federbelastet sind, dadurch gekennzeichnet, dass der Absperrkolben gemeinsam durch das Absperrorgan sowie das Vorsteuerventil gebildet ist, dessen Vorsteuerdurchlass am Absperrkolben fest und dessen Absperrglied zu diesem relativ beweglich ist, dass der Vorsteuerdurchlass in der geöffneten Stellung des Absperrgliedes den Auslass mit dem Kolbenraum verbindet, der mit dem Einlass über eine Drossel (38) ständig verbunden ist und dass der Stössel nach einer ersten Wegstrecke in Öffnungsrichtung des Absperrgliedes auf einer zweiten, in gleicher Bewegungsrichtung anschliessenden Wegstrecke am Absperrorgan entgegen der Wirkung einer diesem letzteren zugeordneten Feder (46) angreift.

6. Regelventil nach Anspruch 5, dadurch gekennzeichnet, dass das Vorsteuerventil (50) im Innern des als Schieber (42) ausgebildeten Absperrorganes angeordnet ist.

7. Regelventil nach Anspruch 6, dadurch gekennzeichnet, dass der Schieber (42) in einer zylindrischen Büchse (30) des Ventilgehäuses (10) beweglich ist, welche mit Durchbrechungen (34) ausgestattet ist.

8. Regelventil nach Anspruch 6, dadurch gekennzeichnet, dass die Durchbrechungen (34) die Nenngrösse desselben bestimmen.

9. Regelventil nach einem der vorangehenden Ansprüche, bei welchem die Spule (106) des Magnetantriebes vom Magnetanker (80) durch eine mit dem Ventilgehäuse (10) verbunene Kapsel (72) getrennt ist, dadurch gekennzeichnet, dass das aus rostfreiem Stahl bestehende Gehäuse mit der den Anker hermetisch umschliessenden Kapsel aus magnetischem Material mittels einer Dauerverbindung, vorzugsweise durch Verschweissung, dichtend verbunden ist.

10. Regelventil nach Anspruch 9, dadurch gekennzeichnet, dass der Magnetanker (80) mit einem von der Kapsel (72) umschlossenen Geberelement (94) starr verbunden ist, dem eine ausserhalb der Kapsel vorgesehene Wegaufnehmerspule (108) zugeordnet ist.

11. Verwendung des Regelventiles nach einem der vorangehenden Ansprüche im Kältemittelkreislauf einer Kälteanlage.

12. Verwendung des Regelventiles nach Anspruch 11, als Absperrventil.

13. Verwendung nach Anspruch 11, als Expansionsventil.
